# EUROPÄISCHE PATENTSCHRIFT

(11) **EP 0 667 821 B1**
(45) Veröffentlichungstag und Bekanntmachung des Hinweises auf die Patenterteilung: **12.03.1997**
(21) Anmeldenummer: 93921915.0
(22) Anmeldetag: 05.10.1993
(51) Int. Cl.: B60H 1/00

(54) **EINRICHTUNG ZUM KÜHLEN VON ANTRIEBSKOMPONENTEN UND ZUM HEIZEN EINES FAHRGASTRAUMES EINES ELEKTROFAHRZEUGS**
DEVICE FOR COOLING DRIVE COMPONENTS AND HEATING A PASSENGER COMPARTMENT OF AN ELECTRIC VEHICLE
DISPOSITIF PERMETTANT DE REFROIDIR DES COMPOSANTS D'ENTRAINEMENT ET DE CHAUFFER L'HABITACLE D'UN VEHICULE ELECTRIQUE

(30) Priorität: 13.11.1992 DE 4238364
(43) Veröffentlichungstag der Anmeldung: 23.08.1995
(73) Patentinhaber: Behr GmbH & Co., 70469 Stuttgart (DE)
(72) Erfinder: BARUSCHKE, Wilhelm, D-73117 Wangen (DE); LOCHMAHR, Karl, D-71665 Vaihingen (DE); ROJNICA, Werner, D-73734 Esslingen (DE)
(74) Vertreter: Riedel, Peter
(86) Internationale Anmeldenummer: EP9302712
(87) Internationale Veröffentlichungsnummer: WO9411212

(56) Entgegenhaltungen:
- WO-A-92/16389
- DE-A- 4 115 141
- US-A- 4 456 055
- PATENT ABSTRACTS OF JAPAN vol. 12, no. 201 (M-707)(3048) 10. Juni 1988 & JP,A,63 008 015 (NIPPON DENSO) 13. Januar 1988

## Beschreibung

Die Erfindung bezieht sich auf eine Einrichtung zum Kühlen von Antriebskomponenten und zum Heizen eines Fahrgastraumes eines Elektrofahrzeugs mit einem von einer Batterie gespeisten Antriebsmotor, der im Oberbegriff des Anspruchs 1 angegebenen Gattung.

Aus der DE-U-92 02 466 ist eine Einrichtung zum Kühlen von Antriebskomponenten und zum Heizen eines Fahrgastraumes eines Kraftfahrzeugs bekannt, bei dem das Antriebsaggregat und insbesondere die Batterie in einen Flüssigkeitskreislauf zum Kühlen dieser Komponenten eingebunden sind. Über einen Wärmetauscher wird die aus der Batterie und ggf. weiteren Komponenten abgeführte Wärmeenergie auf ein zweites Fluid übertragen und je nach Bedarf zur Fahrzeugheizung benutzt oder an die Umgebungsluft abgegeben. Dadurch wird eine zuverlässige Kühlung der Antriebskomponenten sowie eine ausreichende Beheizung des Fahrgastraumes erreicht.

Es ist die Aufgabe der vorliegenden Erfindung, die vorhandenen Wärmequellen optimal zu nutzen und den Betrieb von Komponenten, die die Batterie belasten, zu minimieren.

Diese Aufgabe wird bei einer gattungsgemäßen Einrichtung durch die kennzeichnenden Merkmale des Anspruchs 1 gelöst. Die wesentlichen Vorteile der Erfindung sind insbesondere in der optimalen Prozessführung der Gesamtanlage und dem besonders guten Klimatisierungskomfort des Fahrzeuginnenraumes zu sehen.

Bei Fahrzeugen deren Antriebsenergie allein oder zum großen Teil in einer Batterie enthalten ist, muß selbstverständlich den Zustandsgrößen und den Vorgängen im Zusammenhang mit der Batterie eine übergeordnete Bedeutung zukommen. Die Erfassung der jeweiligen Größen und deren Bewertung erfolgt in einem Batteriesteuergerät, wobei wegen der übergeordneten Bedeutung dieses Gerät, bzw. die dadurch bewirkte Steuerung, in Fachkreisen als "Batterie-Management" bezeichnet werden.

Für den Betrieb einer elektrischen Scheibenheizung oder Heizung für den Außenspiegel sollte stets berücksichtigt werden, ob genügend Energie für deren Betrieb zur Verfügung steht. Es ist daher vorteilhaft, daß ein Leistungsschalter für die elektrische Scheiben- oder Spiegelheizung von dem Steuergerät aktivierbar ist, und zwar unter Berücksichtigung des Ladezustands der Batterie.

Zur Klimatisierung des Fahrgastraumes ist zweckmäßigerweise ein Kältemittelkreislauf vorgesehen, der aus einem Verdampfer, einem Expansionsventil, einem Sammler oder Trockner, einem Kondensator und einem elektrisch angetriebenen Verdichter besteht. Aus ökonomischen Gründen sollte die Kälteleistung stufenlos eingestellt werden können, d.h. der Verdichterantrieb ist drehzahlregelbar, wobei die Soll-Drehzahl des Verdichters vom Steuergerät in Koordination mit dem Batteriesteuergerät vorgegeben wird.

Mit der Möglichkeit zur Vorklimatisierung des Fahrzeuginnenraums vor Antritt einer Fahrt kann die Batteriebelastung reduziert und der Komfort gesteigert werden. Mit einer geeigneten programmierbaren Uhr können, bei Netzbetrieb und vorhandener Entladefreigabe durch das Batteriesteuergerät, die entsprechenden Klimakomponenten, beispielsweise die elektrische Zusatzheizung oder der elektrische Verdichterantrieb zu einem berechneten Zeitpunkt aktiviert werden, wobei sich der Einschaltzeitpunkt aus der programmierten Abfahrtszeit, dem eingestellten Innentemperatur-Sollwert, der aktuellen Außen- und Innentemperatur sowie eventuell weiterer Größen ergibt.

Eine zweckmäßige Weiterbildung des Erfindungsgegenstandes besteht darin, einen Wärmespeicher vorzusehen, der bei Wärmeüberangebot und/oder bei Netzbetrieb beladen wird. Mit der zwischengespeicherten Energie können Phasen mit zu geringem Wärmeangebot ohne Benutzung der elektrischen Zusatzheizung bei gleichbleibendem Komfort überbrückt werden.

Außerdem ist es zweckmäßig die Klimaanlage nach verschiedenen Betriebsarten zu steuern, beispielsweise in einer besonders wirtschaftlichen Weise ECO oder in der Betriebsweise KOMFORT. Ein der eingeschalteten Betriebsart entsprechendes Signal wird dem Steuergerät zugeführt.

Der als Heizkörper wirkende zweite Wärmetauscher ist zweckmäßigerweise in einem Luftführungskanal mit Klappen angeordnet, wobei die Stellmittel für die Klappen an die Ausgangsklemmen des Steuergeräts angeschlossen sind.

Damit die verschiedenen Temperatureinflüsse in die Gesamtregelung einbezogen werden ist es zweckmäßig, weitere Temperatursensoren vorzusehen, insbesondere für die Außentemperatur, die Temperatur der einströmenden Luft sowie die Temperatur am zweiten Wärmetauscher. Weitere Temperaturfühler können zur Erfasssung der Temperaturen des Antriebsmotors, des Motorsteuergerätes oder des Verdichtersteuergerätes vorgesehen sein. Darüber hinaus sollten auch Mittel zur Erfassung der Betriebszustände der von dem Steuergerät angesteuerten Stell- und Antriebsmittel vorgesehen sein, damit entsprechende Rückführsignale dem Steuergerät zugeführt werden.

Ausführungsbeispiele der Erfindung sind nachstehend anhand der Zeichnung näher erläutert.

In der Zeichnung zeigt:
- **Fig. 1a**: eine erste Ausführungsform der Erfindung in der sogenannten Niedrigpreisversion;
- **Fig. 1b**: ein Steuergerät zu Fig. 1a mit der jeweiligen Eingangs- und Ausgangsbeschaltung;
- **Fig. 2a**: eine zweite Ausführungsform der Erfindung für besonders hohe Komfortansprüche;
- **Fig. 2b**: ein Steuergerät zu Fig. 2a mit der jeweiligen Eingangs- und Ausgangsbeschaltung;
- und:
- **Fig. 3**: einen globalen Funktionsplan der Steuerung.

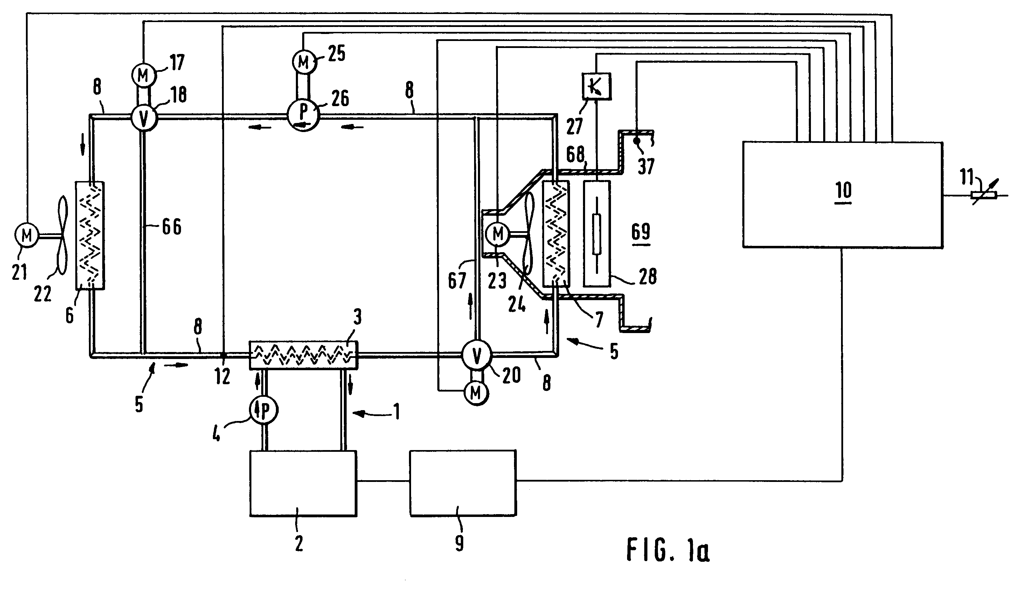

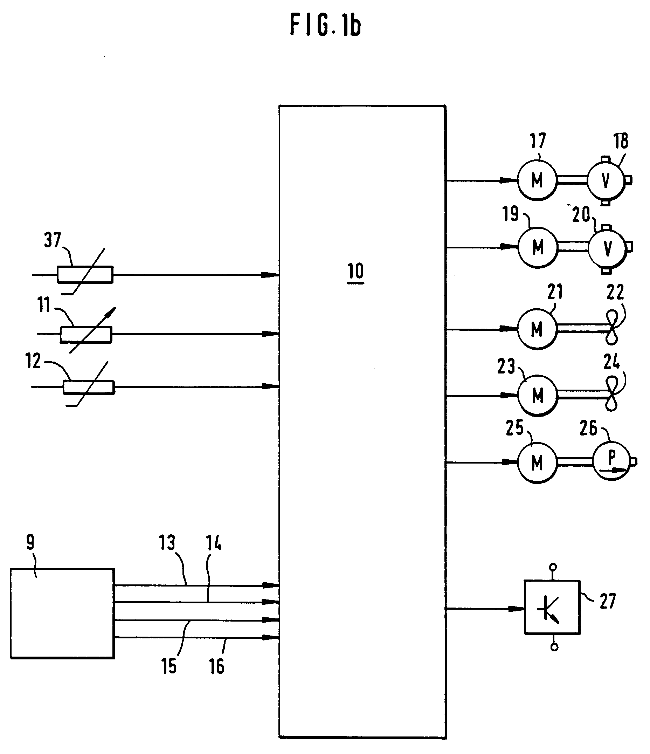

Die **Fig. 1** zeigt einen ersten Kühlmittelkreis 1, der eine Batterie 2, einen Zwischenwärmetauscher 3 und eine erste Kühlmittelpumpe 4 umfaßt. Der Zwischenwärmetauscher 3 ist andererseits in einen zweiten Kühlmittelkreis 5 eingebunden, der einen als Kühler wirkenden ersten Wärmetauscher 6, einen als Heizkörper wirkenden zweiten Wärmetauscher 7 und eine zweite Kühlmittelpumpe 26 umfaßt. Die einzelnen Komponenten des zweiten Kühlmittelkreises 5 sind durch entsprechende Schläuche oder Rohrleitungen 8 miteinander verbunden. In Richtung des Kühlmittelflusses gesehen vor dem ersten Wärmetauscher 6 ist ein Ventil 18 angeordnet, das den Kühlmittelfluß durch einen den ersten Wärmetauscher 6 überbrückenden Bypass 66 steuert. Dem zweiten Wärmetauscher 7 ist ein diesen überbrückender Bypass 67 zugeordnet, der mittels eines Ventils 20 steuerbar ist. Jedem der Ventile 18, bzw. 20 ist ein Stellmotor 17, bzw. 19 zugeordnet.

Dem ersten Wärmetauscher 6 benachbart ist ein mit einem Elektromotor 21 gekoppelter Lüfter 22 zugeordnet. Der zweite Wärmetauscher 7 befindet sich in einem Luftführungsgehäuse 68, und in Strömungsrichtung der Luft ist vor dem zweiten Wärmetauscher 7 ein von einem Elektromotor 23 betriebener Lüfter 24, und hinter dem Wärmetauscher 7 eine elektrische Zusatzheizung 28 angeordnet. Der Luftführungskanal 68 mündet in den mit 69 gekennzeichneten Fahrgastraum. Mit 9 ist ein Batteriesteuergerät bezeichnet, das die für die Batteriesteuerung wichtigen Zustandsgrößen erfaßt und bearbeitet und entsprechende Signale auch an ein Steuergerät 10 gibt. Dem Steuergerät 10 werden außerdem die Signale eines Sollwertstellers 11 sowie eines Kühlmitteltemperaturfühlers 12 und eines Innenraumtemperaturfühlers 37 zugeführt. Auf der Grundlage einer entsprechenden Regelcharakteristik ermittelt das Steuergerät 10 die erforderlichen Ausgangsgrößen, um die elektrischen Antriebe 17, 19, 21, 23 und 25 sowie einen Leistungsschalter 27 für die elektrische Zusatzheizung 28 zu steuern.

In **Fig. 1b** ist das Steuergerät 10 dargestellt, an das eingangsseitig der Sollwertsteller 11 für die gewünschte Innenraumtemperatur, der Innenraumtemperaturfühler 37 für die Ist-Temperatur und der Kühlmitteltemperatursensor 12 geschaltet sind. Ferner sind eingangsseitig an dem Steuergerät 10 Signaleingänge 13 bis 16 vorgesehen, durch welche dem Steuergerät entsprechende Signale für die Entladefreigabe der Batterie, für den Netzanschluß, bzw. Netzbetrieb, für den Ladezustand und für die Temperatur der Batterie zugeführt werden. Die von dem Batteriesteuergerät 9 den Signaleingängen 13 bis 16 des Steuergerätes 10 aufgeschalteten Signale geben Auskunft über den jeweiligen Zustand der Batterie und werden daher - wie bereits erläutert - als Batterie-Management bezeichnet.

Ausgangsseitig sind an dem Steuergerät 10 zwei Stellmotoren 17 und 19 angeschlossen, wobei der Stellmotor 17 auf das Ventil 18 wirkt, das den Bypass des ersten Wärmetauschers steuert, und der Stellmotor 19 auf das zweite Ventil 20 wirkt, das den Bypass des zweiten Wärmetauschers steuert. Außerdem sind an die Ausgangsklemmen des Steuergerätes 10 drei Antriebsmotoren 21, 23 und 25 angeschlossen, wobei der Antriebsmotor 21 den Lüfter 22, der dem ersten Wärmetauscher zugeordnet ist, und der Antriebsmotor 23 das Gebläse 24, das dem zweiten Wärmetauscher zugeordnet ist, antreibt. Der Antriebsmotor 25 treibt die Kühlmittelpumpe 26. Von den Ausgangsklemmen des Steuergerätes 10 wird außerdem der Leistungsschalter 27 gesteuert, der in der Zuleitung der elektrischen Zusatzheizung liegt.

Bei der Anordnung nach Fig. **1a** und **1b** werden die Kühlmittel und Luftdurchsätze durch den ersten und zweiten Wärmetauscher zentral von dem Steuergerät 10 bestimmt und zwar in Abhängigkeit verschiedener aktueller Zustände, die in dem Ausführungsbeispiel den eingestellten Soll-Wert der Fahrgastraumtemperatur, den Ist-Wert der Fahrgastraumtemperatur, die gemessene Kühlmitteltemperatur sowie Batterietemperatur und Ladezustand umfassen. Bei Kühlungsbedarf, d.h. bei hoher Kühlmitteltemperatur, die über den Sensor 12 erfaßt wird, bzw. bei entsprechendem Signal vom Batteriesteuergerät 9, werden Kühlmittel und Luftdurchsatz im ersten Wärmetauscher 6 in geeigneter Weise gesteuert, wobei das Steuergerät 10 auf die Stell- und Antriebsmotoren einwirkt. Der Bypass 66 kann dabei durch das Ventil 18 vollständig gesperrt sein.

Bei Heizungsbedarf, der durch die jeweiligen Signale des Sollwertstellers 11 und Innenraumtemperaturfühlers 37 ermittelt wird, werden Kühlmittel und Luftdurchsatz im zweiten Wärmetauscher entsprechend gesteuert, wobei das Steuergerät 10 auf die entsprechenden Antriebs- und Stellmotoren einwirkt und im Falle einer maximalen Heizleistung der Bypass 67 durch entsprechende Stellung des Ventils 20 vollständig gesperrt wird. Sofern der Ladezustand der Batterie ausreicht und entsprechende Signale am Steuergerät 10 anliegen, kann, bei nicht ausreichender Heizleistung des zweiten Wärmetauschers 7, die elektrische Zusatzheizung 28 aktiviert werden.

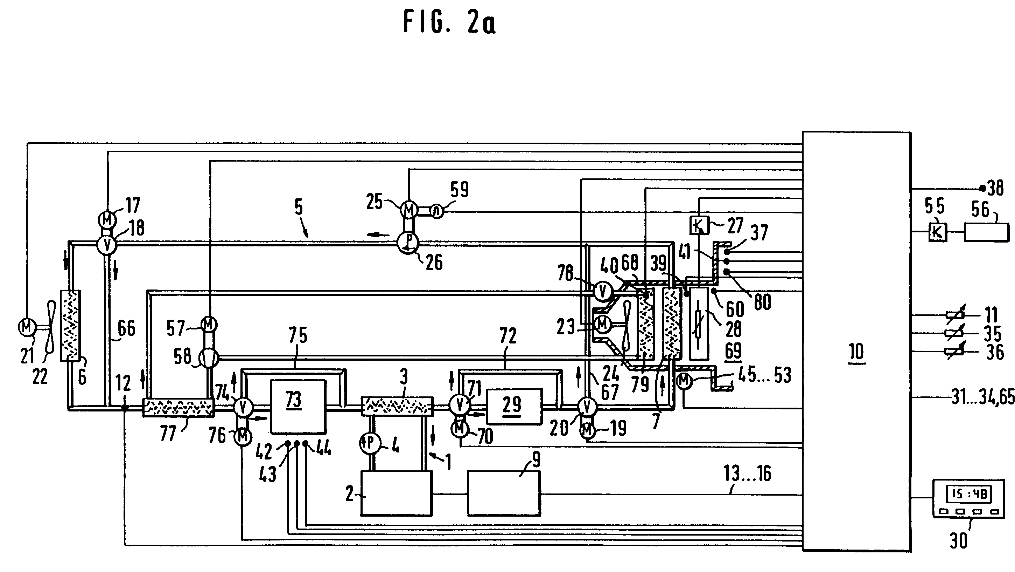

In der **Fig. 2a** ist eine Ausführungsvariante der Erfindung dargestellt, die besonders hohe Komfortansprüche an die Fahrzeugklimatisierung erfüllt. Für die mit Fig. 1a übereinstimmenden Anlagenkomponenten wurden die Bezugszeichen aus Fig. 1a übernommen, so daß nachfolgend lediglich auf die zusätzlichen Komponenten eingegangen wird. In dem zweiten Kühlmittelkreis 5 befindet sich ein Wärmespeicher 29, mit einem diesen überbrückenden und steuerbaren Bypass 72. Zur Steuerung des Bypass 72 dient ein Ventil 71, das von einem Stellmotor 70 betätigbar ist. Durch den Wärmespeicher 29 kann bei ausreichender oder überschüssiger Wärme im zweiten Kühlmittelkreis 5 durch Absperren des Bypass 72 der Wärmespeicher 29 beladen, bzw. bei mangelhaftem Wärmeangebot entladen werden.

In den Kühlmittelkreis 5 können weitere zu kühlende Aggregate eingebunden sein, wie beispielsweise der Elektromotor für den Fahrzeugantrieb, das Steuergerät des Elektromotors oder das Steuergerät für den Verdichter einer Kälteanlage - um nur einige Beispiele zu nennen. Stellvertretend für diese verschiedenen Möglichkeiten ist in Fig. 2a das Bauteil 73 vorgesehen, das durch einen mittels eines Ventils 74 steuerbaren Bypass 75 überbrückbar ist, wobei das Ventil 74 mit einem Stellmotor 76 gekoppelt ist.

Es ist außerdem eine Kälteanlage vorhanden, die einen Verdichter 58, einen Kondensator 77, ein Expansionsventil 78 und einen Verdampfer 79 umfaßt. Der primärseitig vom Kältemittel beaufschlagte Kondensator 77 wird sekundärseitig vom Kühlmittel des zweiten Kühlmittelkreises 5 durchströmt, so daß die im Kältemittel enthaltene Wärmeenergie im Kondensator 77 an das Kühlmittel abgegeben wird. Der Verdampfer 79 ist in dem Luftführungsgehäuse 68 zwischen dem Lüfter 24 und dem zweiten Wärmetauscher 7 angeordnet, so daß bei Betrieb der Kälteanlage die dem Fahrgastraum 69 zuzuführende Luft abgekühlt wird. Der Verdichter 58 wird von einem Elektromotor 57 angetrieben. Es ist ersichtlich, daß die Ansteuerung der in Fig. 2a zusätzlich vorhandenen Motoren 57, 70, 76 durch das Steuergerät 10 erfolgt.

Der Antriebsmotor 25 für die Pumpe 26 ist mit einem Drehzahlgeber 59 gekoppelt, dessen Signal den Eingangsklemmen des Steuergerätes 10 zugeführt wird. Auf diese Weise wird auch die Pumpendrehzahl mit in die Gesamtregelung einbezogen.

Zur geeigneten Steuerung des Luftstroms im Luftführungskanal 68 und Verteilung auf verschiedene Ausströmdüsen im Fahrgastraum 69, sind mehrere Klappen und Klappenantriebe vorgesehen, die an sich in Fahrzeugklimaanlagen bekannt sind. Aus Platzgründen ist in Fig. 2a stellvertretend lediglich 1 Stellmotor dargestellt, der mit den Bezugszeichen 45...53 versehen ist. Die Steuerung der Klappenantriebe erfolgt durch das Steuergerät 10.

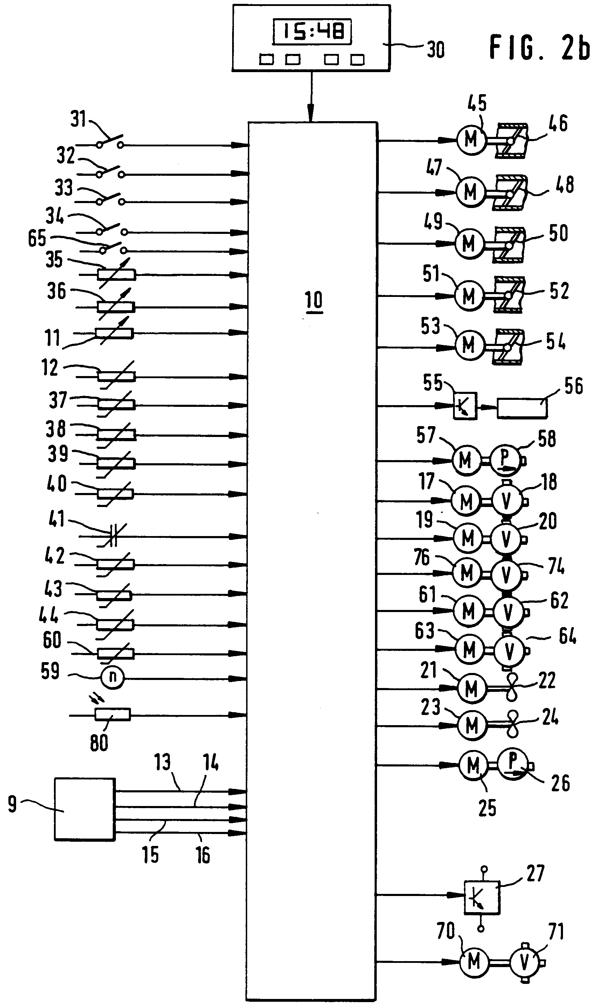

Durch die erhöhte Anzahl von Aggregaten und auch die Möglichkeiten der Einflußnahme auf die Steuerung ist es notwendig, zusätzliche Sensoren vorzusehen. Es handelt sich dabei um einen Sensor 42 zur Erfassung der Temperatur des Elektromotors, einen Sensor 43 für die Temperatur des Elektromotorsteuergerätes sowie einen Sensor 44 für die Temperatur des Verdichtersteuergerätes. Es sind ferner ein Außentemperatursensor 38, ein Sensor 39 für die Temperatur am zweiten Wärmetauscher und ein Sensor 40 am Verdampfer, ein Sensor 41, der die Luftfeuchte im Fahrzeuginnenraum erfaßt, sowie ein Solarsensor 80 vorgesehen. Zusätzlich zu dem Sollwertsteller 11 für die Soll-Temperatur sind noch Sollwertsteller 35 für die Temperaturschichtung der in den Fahrgastraum einströmenden Luft und ein Sollwertsteller 36 für die gewünschte Luftmenge vorgesehen. Außerdem sind noch weitere Signalgeber 31 bis 34 und 65 vorhanden, die nachstehend zu Fig. 2b näher erläutert werden.

Vom Steuergerät 10 wird auch ein Leistungsschalter 55 angesteuert, der bedarfsweise eine elektrische Scheibenheizung 56 oder eine elektrische Heizung für einen Außenspiegel aktiviert.

Eine elektrische Uhr 30 dient zur Vorklimatisierung des Fahrgastraumes 69. Mit Hilfe dieser Uhr 30 wird die gewünschte Abfahrtszeit eingestellt und das Steuergerät 10 ermittelt unter Berücksichtigung verschiedener Parameter, insbesondere der Sensoren 37 und 38, zu welchem Zeitpunkt die Vorklimatisierung beginnen muß und welche Aggregate zu aktivieren sind, beispielsweise Verdichterantrieb 57 oder elektrische Zusatzheizung 28.

Bei dem in **Fig. 2b** dargestellten Ausführungsbeispiel ist an das Steuergerät 10 eingangsseitig neben dem Sollwertsteller 11 für die gewünschte Innenraumtemperatur der Sollwertsteller 36 für die gewünschte Luftmenge und der Sollwertsteller 35 für die Temperaturschichtung der in den Fahrgastraum einströmenden Luft angeschlossen. Ferner sind neben dem Sensor 12 für die Kühlwassertemperatur und dem Sensor 37 für die Innenraumtemperatur weitere Temperatursensoren vorgesehen, nämlich der Sensor 38 für die Außentemperatur, der Sensor 39 für die Temperatur am zweiten Wärmetauscher und der Sensor 40 am Verdampfer. Ein Sensor 41 zur Ermittlung der Luftfeuchte im Fahrzeuginnenraum sowie ein Solarsensor 80 zur Erfassung der Sonneneinstrahlung geben ebenfalls Signale an die Eingangsklemmen des Steuergerätes 10. Während die Sensoren 37 bis 41 und 60 die für die Fahrzeugheizung bzw. Klimatisierung bestimmenden Größen erfassen, sind außerdem Temperatursensoren für Antriebsmittel und Hilfsaggregate vorgesehen, die ebenfalls an die Eingänge des Steuergerätes 10 geschaltet sind. Es handelt sich dabei um den Sensor 42 zur Erfassung der Temperatur des Elektromotors, den Sensor 43 für die Temperatur des Elektromotorsteuergerätes sowie den Sensor 44 für die Temperatur des Verdichtersteuergerätes.

Im Vergleich zu Fig. 1b sind an das Steuergerät 10 der Fig. 2b zusätzliche Signalgeber geschaltet, die in Abhängigkeit des Einschaltzustandes oder Betriebsweise bestimmter Verbraucher ein entsprechendes Signal erzeugen. Der Signalgeber 31 erfaßt den Einschaltezustand der Fahrzeug-Klimaanlage (Kältemittelanlage), der Signalgeber 32 erfaßt den Frischluft- oder Umluftbetrieb, der Signalgeber 33 erfaßt den Entfrosterbetrieb, der Signalgeber 65 erfaßt den Schaltzustand eines sogenannten "ECO"-Schalters für wirtschaftlichen oder komfortablen Betrieb der Klimaanlage und ein Signalgeber 34 erfaßt den Einschaltzustand der heizbaren Heckscheibe.

Ausgangsseitig sind am Steuergerät 10 neben dem Stellmotor 17 für das Ventil 18 und den Stellmotor 19 für das Ventil 20 drei weitere Stellmotoren 61, 63, 76 angschlossen, bei denen der Stellmotor 76 auf das Ventil 74 für einen Bypass des Elektromotors, der Stellmotor 61 auf ein Ventil 62 für einen Bypass des Steuergerätes für den Elektromotor und der Stellmotor 63 auf ein Ventil 64 für einen Bypass des Verdichtersteuergerätes wirkt. Ferner werden von den Ausgängen des Steuergerätes 10 die Stellmotoren 45, 47, 49, 51 und 53 angesteuert, die wiederum zur Betätigung einer Frischluftklappe 46, einer Umluftklappe 48, einer Entfrosterklappe 50 sowie einer Schichtungsklappe 52 und einer Belüftungsklappe 54 dienen.

Von den Ausgangsklemmen des Steuergerätes 10 werden außerdem die Leistungsschalter 27, 55 für die Zusatzheizungen 28 und 56 gesteuert. Ebenfalls von den Ausgangssignalen des Steuergerätes 10 wird der Stellmotor 70 für das Ventil 71 des Speicherbypass angesteuert.

Außerdem sind die Ausgangsklemmen des Steuergerätes 10 an drei Antriebsmotoren 21, 23 und 25 angeschlossen, wobei der Antriebsmotor 21 den Lüfter 22, der dem ersten Wärmetauscher zugeordnet ist, der Antriebsmotor 23 das Gebläse 24, das dem zweiten Wärmetauscher zugeordnet ist, und der Antriebsmotor 25 die Kühlmittelpumpe 26 antreibt. Der Antriebsmotor 57, der ebenfalls von den Ausgangssignalen des Steuergerätes 10 angesteuert wird, treibt den Verdichter 58 des Kältemittelkreislaufes.

Die programmierbare Zeitschaltuhr 30 meldet dem Steuergerät 10 die vorgesehene Abfahrtszeit. Im Steuergerät werden dann die erforderlichen Bedingungen für die Vorklimatisierung errechnet, beispielsweise welche Aggregate zu welchem Zeitpunkt zu aktivieren sind. Es kann dabei mit Hilfe der Kälteanlage oder der Zusatzheizung bereits vor Fahrtantritt eine behagliche Innenraumtemperatur erzeugt werden, je nach Umgebungstemperatur, Sonneneinstrahlung und gewünschter Innenraumtemperatur.

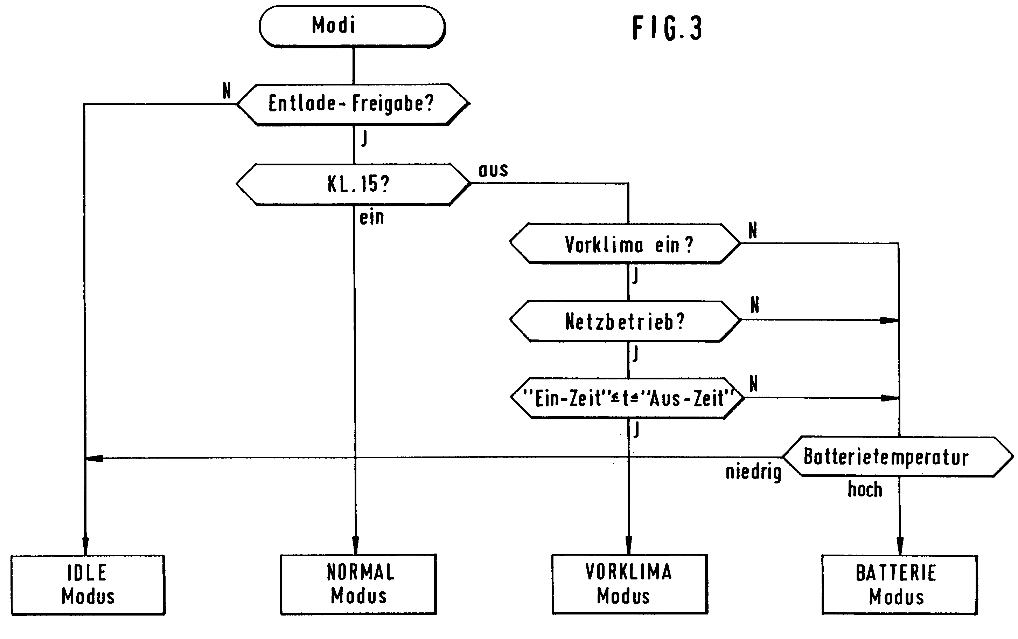

In **Fig. 3** ist der generelle Funktionsablauf des Steuergerätes 10 dargestellt. Das Steuergerät stellt sich entsprechend den hier genannten Bedingungen auf einen der vier Hauptbetriebszustände (Idle-, Normal-, Vorklima-, oder Batterie-Modus) ein. Zunächst erfolgt die Abfrage nach der Entladefreigabe, d.h., ob genügend Energie für einen bestimmten Modus bereitgestellt werden kann. Ist das entsprechende Signal N, so wird ein Idle-Modus aktiviert, das ist eine Betriebsart minimaler Stromaufnahme von Steuergerät und Peripherie. Ist jedoch das entsprechende Signal J, so wird festgestellt, ob der Schalter für Klemme 15 des Bordnetzes ein- oder ausgeschaltet ist. Sofern Klemme 15 zugeschaltet ist, wird ein Normal-Modus aktiviert. Ist dagegen Klemme 15 abgeschaltet, so wird danach festgestellt, ob die Vorklimatisierung eingeschaltet ist. Sofern das Signal N anliegt und somit die Vorklimatisierung nicht eingeschaltet ist, so erfolgt die nächste Abfrage über die momentane Batterietemperatur. Liegt diese Temperatur oberhalb einer bestimmten Schwelle (hoch), so wird ein Batterie-Modus zur Kühlung der Batterie bei Fahrzeugstillstand aktiviert; liegt sie dagegen unterhalb dieser Schwelle (niedrig), so wird der Idle-Modus aktiviert.

Liegt bei der Abfrage über den Einschaltzustand der Vorklimatisierung das Signal J an, so erfolgt die nächste Abfrage nach dem Netzbetrieb, d.h., ob das Bordnetz des Elektrofahrzeuges an ein externes Netz angeschlossen ist. Ist der Netzbetrieb nicht gegeben, so wird wiederum die Abfrage nach der Batterietemperatur durchgeführt und der dementsprechende Modus gesteuert. Liegt bei der Abfrage nach dem Netzbetrieb das Signal J an, so wird festgestellt, ob die aktuelle Zeit innerhalb eines berechneten Vorklimatisierungs-Zeitintervalls liegt. Ist dies der Fall und liegt als Ausgangssignal J an, so wird der Vorklima-Modus aktiviert, ansonsten folgt wiederum die Abfrage nach der Batterietemperatur. Die Modus-Auswahl nach Fig. 3 erfolgt zyklisch, d.h. auch im Idle-Modus ist eine permanente Betriebsbereitschaft gegeben.

## Patentansprüche

1. Einrichtung zum Kühlen von Antriebskomponenten und zum Heizen eines Fahrgastraumes (69) eines Elektrofahrzeugs mit einem von einer Batterie (2) gespeisten Antriebsmotor, wobei die Batterie (2) und gegebenenfalls weitere Antriebskomponenten in einen ersten Kühlmittelkreislauf (1) eingebunden sind, der mittels eines Zwischenwärmetauschers (3) mit einem zweiten Kühlmittelkreis (5) gekoppelt ist, welcher zumindest einen als Kühler wirkenden ersten Wärmetauscher (6) und einen als Heizkörper wirkenden zweiten Wärmetauscher (7) und eine Kühlmittelpumpe (26) umfaßt, und dem ersten und zweiten Wärmetauscher (6, 7) jeweils ein Lüfter (22, 24) zugeordnet ist, **dadurch gekennzeichnet,** daß der erste und zweite Wärmetauscher (6, 7) im zweiten Kühlmittelkreis (5) mit je einem steuerbaren Bypass (66, 67) versehen ist, und daß ein einen Mikroprozessor beinhaltendes elektronisches Steuergerät (10) vorhanden ist, dem eingangsseitig ein Sollwertsteller (11), ein Innenraumtemperaturfühler (37) für die Heizleistung und ein Kühlmitteltemperaturfühler (12) zugeschaltet sind, und dem folgende aus dem Batteriesteuergerät abgeleitete Signale, nämlich
- Entlade-Freigabe (13)
- Netzanschluß (Ladevorgang) (14)
- Ladezustand (15)
und
- Batterietemperatur (16)
zugeleitet werden, und das Steuergerät (10) ausgangsseitig mit Stell- bzw. Antriebsmitteln (17, 19, 21, 23, 25) für die Wärmetauscherbypässe (66, 67), die Kühlmittelpumpe (26), die Lüfter (22) bzw. Gebläse (24) verbunden ist.

2. Einrichtung nach Anspruch 1, **dadurch gekennzeichnet,** daß eine elektrische Zusatzheizung (28) vorgesehen ist, die mittels eines von dem Steuergerät (10) aktivierten Leistungsschalters (27) einschaltbar ist.

3. Einrichtung nach einem der vorhergehenden Ansprüche, **dadurch gekennzeichnet,** daß der erste Kühlmittelkreis (1), mit einem hitzebeständigen Öl und der zweite Kühlmittelkreis (5) mit einem Glykol-Wasser-Gemisch gefüllt ist.

4. Einrichtung nach einem der vorhergehenden Ansprüche, **dadurch gekennzeichnet,** daß der zweite Wärmetauscher (7) in einem Luftführungskanal (68) mit Klappen (46, 48, 50, 52, 54) angeordnet ist, wobei die Stellmotore (45, 47, 49, 51, 53) für diese Klappen an die Ausgangsklemmen des Steuergerätes (10) angeschlossen sind.

5. Einrichtung nach einem der vorhergehenden Ansprüche, **dadurch gekennzeichnet,** daß ein Leistungschalter (55) für eine elektrische Scheiben- oder Spiegelheizung (56) von dem Steuergerät aktivierbar ist und daß Mittel (34) vorgesehen sind, die den Einschaltzustand der elektrischen Scheiben- oder Spiegelheizung (56) erfassen und ein entsprechendes Signal an die Eingangsklemmen des Steuergerätes (10) geben.

6. Einrichtung nach einem der vorhergehenden Ansprüche, **dadurch gekennzeichnet,** daß im zweiten Kühlmittelkreis (5) ein Wärmespeicher (29) mit einem steuerbaren Bypass (72) versehen ist.

7. Einrichtung nach Anspruch 4, **dadurch gekennzeichnet,** daß ein Kältemittelkreislauf, bestehend aus einem Verdampfer (79), einem Expansionsventil (78), einem Kondensator (77) und einem Verdichter (58), vorgesehen ist, wobei der Verdampfer (79) in dem Luftführungskanal (68) angeordnet und der Verdichter mit Mitteln zur Drehzahl- und/oder Füllungsgradbeeinflussung versehen ist, wobei die genannten Mittel an die Ausgangsklemmen des Steuergerätes (10) angeschlossen sind.

8. Einrichtung nach einem der vorhergehenden Ansprüche, **dadurch gekennzeichnet,** daß eingangsseitig an das Steuergerät (10) ein Sollwertsteller (36) für die dem Fahrgastraum zuströmende Luftmenge und/oder ein Sollwertsteller (35) für die Temperaturschichtung angeschlossen sind.

9. Einrichtung nach einem der vorhergehenden Ansprüche, **dadurch gekennzeichnet,** daß eingangsseitig an das Steuergerät (10) zusätzlich einer oder mehrere der nachfolgend genannten Sensoren angeschlossen sind:
- Außentemperaturfühler (38);
- Temperaturfühler (60) für die in den Fahrgastraum (69) einströmende Luft;
- Temperaturfühler am zweiten Wärmetauscher (39);
- Temperaturfühler (42) für den Antriebsmotor (73) des Fahrzeugs;
- Temperaturfühler (43) für das Steuergerät (73) des Antriebsmotors (73);
- Temperaturfühler (43) für das Steuergerät (73) des Verdichters (58);
- ein Signalgeber (32) für den Frischluft- oder Umluftbetrieb;
- ein Signalgeber (33) für den Defrosterbetrieb.

10. Einrichtung nach Anspruch 5, **dadurch gekennzeichnet,** daß Mittel zur Erfassung der Stellung der jeweiligen Klappe (46, 48, 50, 52, 54) vorgesehen und diese mit den Eingangsklemmen des Steuergerätes (10) verbunden sind.

11. Einrichtung nach einem der vorhergehenden Ansprüche, **dadurch gekennzeichnet,** daß der Kühlmittelpumpe (26), bzw. deren Antriebsmotor (27) ein Drehzahlsensor (59) zugeordnet ist, dessen Ausgangssignal dem Eingang des Steuergerätes (10) zugeführt wird.

12. Einrichtung nach Anspruch 7, **dadurch gekennzeichnet,** daß ein Temperaturfühler (40) zur Erfassung der Verdampfertemperatur vorgesehen ist, dessen Signal dem Eingang des Steuergerätes (10) zugeführt wird.

13. Einrichtung nach Anspruch 7, **dadurch gekennzeichnet,** daß eine programmierbare Uhr (30) vorgesehen ist, welche bei Fahrzeugstillstand die elektrische Zusatzheizung (28) oder die Kälteanlage bedarfsweise zu vorgewählten Zeiten aktiviert.

14. Einrichtung nach Anspruch 13, **dadurch gekennzeichnet,** daß das Steuergerät (10) eingangsseitig mit einem Signalgeber (65) verbunden ist, der - in Abhängigkeit vorgewählter Betriebsarten der Kälteanlage - ein Signal dem Steuergerät (10) zuführt und ein Signalgeber (31) für den Einschaltzustand der Kälteanlage vorgesehen ist.

## Claims

1. Device for cooling drive components and for heating a passenger compartment (69) of an electric vehicle having a drive motor fed by a battery (2), the battery (2) and, optionally, further drive components being integrated in a first cooling agent circuit (1) which is connected by means of an intermediate heat exchanger (3) to a second cooling agent circuit (5), which comprises at least a first heat exchanger (6) acting as a cooler and a second heat exchanger (7) acting as a heater and a cooling agent pump (26), and a ventilator (22,24) is allocated to the first and the second heat exchanger (6,7) in each case, characterised in that the first and second heat exchangers (6,7) are, in the second coolant circuit, each provided with a controllable bypass (66,67); and in that an electronic control device (10) containing a microprocessor is provided, to which there is connected, on the input side, an intended-value setter (11), and inner chamber temperature sensor (37) for the heating performance and a cooling agent temperature sensor (12), and to which the following signals, derived from the battery control device, are conducted, these signals being
- discharge-clearance (13)
- mains connection (charging process) (14)
- charge state (15)
and
- battery temperature (16)
and the control device (10) is connected on the output side to adjusting and drive means (17, 19, 21, 23, 25) for the heat exchanger bypasses (66,67), the cooling agent pump (26), and the ventilators (22) or fans (24).

2. Device according to Claim 1, characterised in that an electric booster heater (28) is provided, which can be switched on by means of a performance switch (27) controlled by the control device (10).

3. Device according to one of the preceding Claims, characterised in that the first cooling agent circuit (1) is filled with a heat-resistant oil and the second cooling circuit (5) is filled with a glycol/water mixture.

4. Device according to one of the preceding Claims, characterised in that the second heat exchanger (7) is disposed in an air-guiding duct (68) with flaps (46, 48, 50, 52, 54), herein the setting motors (45, 47, 49, 51, 53) for these flaps are connected to the output terminals of the control device (10).

5. Device according to one of the preceding Claims, characterised in that a performance switch (55) for an electronic windscreen or mirror heater (56) can be activated by the control device, and that means (34) are provided which determine the switched-on state of the electrical windscreen or mirror heater (56) and transmit a corresponding signal to the input terminal of the control device (10).

6. Device according to one of the preceding Claims, characterised in that a heat reservoir (29) with a controllable bypass (72) is provided in the second cooling agent circuit (5).

7. Device according to Claim 4, characterised in that a cooling agent circuit, consisting of an evaporator (79), a condenser (77) and a compressor (58), is provided, the evaporator (79) being disposed in the air duct (68) and the compressor being provided with means influencing the rotation speed and/or the filling level, said means being connected to the output terminals of the control device (10).

8. Device according to one of the preceding Claims, characterised in that an intended-value setter (36) for the air flowing to the passenger compartment and/or an intended-value setter for the temperature level are connected to the control device (10) on the input side.

9. Device according to one of the preceding Claims, characterised in that one or more of the following sensors are additionally connected at the input side of the control device (10):
- external temperature sensor (38);
- temperature sensor (60) for the air flowing into the passenger compartment (69);
- temperature sensor at the second heat exchanger (39);
- temperature sensor (42) for the drive motor (73) of the vehicle;
- temperature sensor (43) for the control device (73) of the drive motor (73);
- temperature sensor (43) for the control device (73) of the condenser (58);
- a signal generator (32) for the fresh air or environmental air operation; and
- a signal generator (33) for the defroster operation.

10. Device according to Claim 5, characterised in that means for determining the position of each lap (46, 48, 50, 52, 54) are provided and these are connected to the input terminals of the control device (10).

11. Device according to one of the preceding Claims, characterised in that a rotational speed sensor (59) is allocated to the cooling agent pump (26) or the drive motor (27) thereof, the output signal of which rotational speed sensor is transmitted to the input of the control device (10).

12. Device according to Claim 7, characterised in that a temperature sensor (40) is provided to determine the evaporator temperature, the signal of which temperature sensor is conducted to the input of the control device (10).

13. Device according to Claim 7, characterised in that there is provided a programmable clock (30), which, when the vehicle is stationary, activates the electrical additional heating (28) or the cooling system when required, at preset times.

14. Device according to Claim 13, characterised in that the control device (10) is connected at the input side to a signal generator (65) which - dependent on pre-selected operating modes of the cooling system - conducts a signal to the control device (10) and a signal generator (31) is provided for the switched-on state of the cooling system.

## Revendications

1. Dispositif pour refroidir des composants d'entraînement et chauffer l'habitacle (69) d'un véhicule électrique comportant un moteur d'entraînement alimenté par une batterie (2), la batterie (2) et éventuellement d'autres composants d'entraînement étant insérés dans un premier circuit (1) d'un fluide de refroidissement, qui est couplé, au moyen d'un échangeur de chaleur intermédiaire (3), à un second circuit de fluide de refroidissement (5), qui comprend au moins un premier échangeur de chaleur (6) agissant en tant que refroidisseur et un second échangeur de chaleur (16) agissant en tant que corps chauffant, et une pompe (26) d'entraînement du fluide de refroidissement, et un ventilateur respectif (22,24) étant associé aux premier et second échangeurs de chaleur (6,7), caractérisé en ce que les premier et second échangeurs de chaleur (6,7) sont pourvus, dans le second circuit de fluide de refroidissement (5), d'un bipasse respectif commandable (66,67), et qu'il est prévu un appareil de commande électronique (10) qui contient un microprocesseur et au côté entrée duquel sont connectés un régulateur de valeur de consigne (11), un capteur (37) de la température de l'espace intérieur pour la puissance de chauffage et un capteur (12) de la température du fluide de refroidissement, et auquel sont envoyés les signaux suivants, qui sont délivrés par l'appareil de commande de la batterie, à savoir :
• libération de décharge (13),
• raccordement au réseau (processus de charge) (14),
• état de charge (15), et
• température de la batterie (16),
et que l'appareil de commande (10) est relié, côté sortie, à des moyens de réglage et d'entraînement (17,19,21,23,25) pour les bipasses (66,67) de l'échangeur de chaleur, la pompe (26) de circulation du fluide de refroidissement, le ventilateur (22) et la soufflante (24).

2. Dispositif selon la revendication 1, caractérisé en ce qu'il est prévu un dispositif de chauffage électrique supplémentaire (28), qui peut être branché au moyen d'un interrupteur de puissance (27) activé par l'appareil de commande (10).

3. Dispositif selon l'une des revendications précédentes caractérisé en ce que le premier circuit de fluide de refroidissement (1) est rempli par de l'huile résistant à la chaleur et que le second circuit de fluide de refroidissement (5) est rempli par un mélange glycol eau.

4. Dispositif selon l'une des revendications précédentes, caractérisé en ce que le second échangeur de chaleur (7) est disposé dans un canal d'amenée d'air (68) comportant des clapets (46,48,50,52,54), les servomoteurs (45,47,49,51,53) pour ces clapets étant raccordés aux bornes de sortie de l'appareil de commande (10).

5. Dispositif selon l'une des revendications précédentes, caractérisé en ce qu'un interrupteur de puissance (55) pour un dispositif électrique (56) de chauffage d'une vitre ou d'un rétroviseur peut être activé par l'appareil de commande, et qu'il est prévu des moyens (34) qui détectent l'état branché du dispositif électrique (56) de chauffage de vitre ou de rétroviseur et envoie un signal correspondant aux bornes d'entrée de l'appareil de commande (10).

6. Dispositif selon l'une des revendications précédentes, caractérisé en ce que l'accumulateur de chaleur (29) comportant un bipasse commandable (72) est prévu dans le second circuit de fluide de refroidissement (5).

7. Dispositif selon la revendication 4, caractérisé en ce qu'il est prévu un circuit de fluide de refroidissement, qui est constitué par un évaporateur (79), une soupape d'expansion (78), un condenseur (77) et un compresseur (58), l'évaporateur (79) étant disposé dans le canal (68) de guidage de l'air et le compresseur étant équipé de moyens pour influer sur la vitesse de rotation et/ou le degré de remplissage, les moyens indiqués étant raccordés aux bornes de sortie de l'appareil de commande (10).

8. Dispositif selon l'une des revendications précédentes, caractérisé en ce qu'un régulateur de valeur de consigne (36) pour la quantité d'air pénétrant dans l'habitacle et/ou un régulateur de valeur de consigne (35) pour l'étagement de température sont raccordés côté entrée à l'appareil de commande (10).

9. Dispositif selon l'une des revendications ,précédentes, caractérisé en ce qu'à l'appareil de commande (10) sont en outre raccordés, côté entrée, plusieurs des capteurs indiqués ci-après :
• capteur (38) de la température extérieure ;
• capteur de température (60) pour l'air arrivant dans l'habitacle (69) ;
• capteur de température installé sur le second échangeur de chaleur (39) ;
• capteur de température (42) pour le moteur d'entraînement (73) du véhicule ;
• capteur de température (43) pour l'appareil de commande (73) du moteur d'entraînement (73) ;
• capteur de température (43) pour l'appareil de commande (73) du compresseur (58) ;
• générateur de signaux (32) pour le fonctionnement avec arrivée d'air frais ou avec circulation d'air ;
• générateur de signaux (33) pour le fonctionnement avec dégivrage.

10. Dispositif selon la revendication 5, caractérisé en ce qu'il est prévu des moyens pour détecter la position des clapets respectifs (46,48,50,52,54) et que ces moyens sont reliés aux bornes d'entrée de l'appareil de commande (10).

11. Dispositif selon l'une des revendications précédentes, caractérisé en ce qu'à la pompe (26) de circulation du fluide de refroidissement ou à son moteur d'entraînement (27) est associé un capteur (59) de la vitesse de rotation, dont le signal de sortie est envoyé à l'entrée de l'appareil de commande (10).

12. Dispositif selon la revendication 7, caractérisé en ce qu'il est prévu un capteur de température (40) pour détecter la température de l'évaporateur et dont le signal est envoyé à l'entrée de l'appareil de commande (10).

13. Dispositif selon la revendication 7, caractérisé en ce qu'il est prévu une horloge programmable (30), qui lorsque le véhicule est à l'état arrêté, active le cas échéant, à des instants présélectionnés, le dispositif de chauffage électrique supplémentaire (28) ou l'installation de refroidissement.

14. Dispositif selon la revendication 13, caractérisé en ce que l'appareil de commande (10) est relié, côté entrée, à un transmetteur de signaux (65), qui - en fonction de types présélectionnés de fonctionnement de l'installation de refroidissement - envoie un signal à l'appareil de commande (10) et qu'il est prévu un générateur de signaux (32) pour indiquer l'état branché de l'installation de refroidissement.
